# EUROPÄISCHE PATENTSCHRIFT

(11) **EP 0 434 782 B1**
(45) Veröffentlichungstag und Bekanntmachung des Hinweises auf die Patenterteilung: **10.11.1993**
(21) Anmeldenummer: 90907048.4
(22) Anmeldetag: 21.05.1990
(51) Int. Cl.: B60T 13/565, B60T 7/06, B60T 11/20, B60T 13/57

(54) **BETÄTIGUNGSEINHEIT FÜR EINE HYDRAULISCHE KRAFTFAHRZEUGBREMSANLAGE**
ACTUATOR UNIT FOR A HYDRAULIC BRAKE SYSTEM IN A MOTOR VEHICLE
BLOC DE COMMANDE POUR CIRCUIT DE FREINAGE HYDRAULIQUE D'UN VEHICULE AUTOMOBILE

(30) Priorität: 15.07.1989 DE 3923459
(43) Veröffentlichungstag der Anmeldung: 03.07.1991
(73) Patentinhaber: ITT Automotive Europe GmbH, 60488 Frankfurt (DE)
(72) Erfinder: BAUER, Jürgen, D-6200 Wiesbaden (DE)
(86) Internationale Anmeldenummer: EP9000815
(87) Internationale Veröffentlichungsnummer: WO9101236

(56) Entgegenhaltungen:
- EP-A- 0 110 740
- DE-A- 3 107 918
- DE-A- 3 401 402
- FR-A- 2 192 247
- US-A- 3 159 975

## Beschreibung

Betätigungseinheit für eine hydraulische Kraftfahrzeugbremsanlage

Die Erfindung betrifft eine Betätigungseinheit, bestehend aus:
einem Unterdruck-Bremskraftverstärker, dessen Verstärkergehäuse durch eine bewegliche Wand in eine Unterdruckkammer und eine mittels eines in einem Steuerventilgehäuse untergebrachten Steuerventils belüftbare Arbeitskammer unterteilt ist;
einem dem Unterdruck-Bremkraftverstärker wirkungsmäßig nachgeschalteten Hauptbremszylinder mit zwei in einem Gehäuse vorzugsweise hintereinander angeordneten, durch zwei Kolben begrenzten Druckräumen, deren Verbindung mit einem drucklosen Druckmittelsvorratsbehälter mittels zweier Ventile absperrbar bzw. freigebbar ist, sowie einem das Steuerventil betätigenden Bedienungsorgan, das zwischen dem Unterdruck-Bremskraftverstärker und dem Hauptbremszylinder angeordnet ist, wobei
die zur Bildung einer auf die bewegliche Wand einwirkenden Druckdifferenz benötigte Luft dem Steuerventil aus dem Motorraum des Kraftfahrzeugs zugeführt wird.

Durch die deutsche Offenlegungsschrift 31 07 918 ist bereits eine derartige Betätigungseinheit bekannt geworden. Das Besondere an der vorbekannten Betätigungseinheit besteht darin, daß die das Steuerventil betätigende Betätigungsvorrichtung zwei parallel zu den Hauptzylinderkolben angeordnete Betätigungsstangen aufweist, deren eine Enden über ein erstes Joch mit dem Betätigungsorgan und deren andere Enden über ein zweites Joch mit einer Reaktionseinrichtung verbunden sind, die die Betätigungskraft mit der von der beweglichen Wand abgegebenen Verstärkungskraft in einem vorbestimmten Verhältnis addiert und auf eine den Hauptbremszylinder betätigende Druckstange überträgt.

Die bekannte Anordnung hat folgende Nachteile:
1. Die Reaktionseinrichtung ist durch eine gummielastische Reaktionsscheibe gebildet, deren Wärmedehnung bei hohen Temperaturen zum Schließen der im Hauptzylinder vorgesehenen Ausgleichsbohrungen führen kann.
2. Bei einem Ausfall des für die Funktion des Bremskraftverstärkers erforderlichen Unterdrucks wird die Betätigungskraft über die Reaktionsscheibe auf den ersten Hauptzylinderkolben übertragen. Dies hat zur Folge, daß vom Fahrer eine hohe Betätigungskraft aufgebracht werden muß, um die erforderliche Bremswirkung zu erzielen.
3. Die die Druckräume des Hauptbremszylinders mit einem Druckmittelvorratsbehälter verbindenen Ventile sind durch an den Kolben angeordnete Dichtmanschetten gebildet, die mit den vorhin erwähnten Ausgleichsbohrungen in der Hauptzylindergehäusewandung zusammenwirken. Als besonders nachteilig wird vor allem der bei der Betätigung auftretende Leerweg zum Überfahren der ersten Ausgleichsbohrung empfunden.
   Ein weiterer Nachteil besteht darin, daß durch die Tandemanordnung bzw. die Hintereinanderschaltung der Ventile beide Ausgleichsbohrungen von den zugeordneten Dichtmanschetten überfahren werden müssen, bevor in den Druckräumen ein Druck aufgebaut werden kann.

Es ist daher Aufgabe der vorliegenden Erfindung eine Betätigungseinheit der eingangs genannten Gattung vorzuschlagen, bei der die oben erwähnten Nachteile weitgehend eliminiert werden und bei einem Unterdruckausfall kein überdurchschnittlicher Anstieg der Betätigungskraft erforderlich ist. Außerdem soll ein gleichzeitiger Druckaufbau in den beiden Druckräumen bei einer Minimierung des bei Betätigung auftretenden Leerweges ermöglicht werden.

Diese Aufgabe wird erfindungsgemäß durch die Kombination folgender Merkmale gelöst:

Der den ersten (Primär-) Druckraum begrenzender Kolben (Primärkolben) ist) zweiteilig ausgebildet und besteht aus einem mit der beweglichen Wand in kraftübertragender Verbindung stehenden Außenkolben und einem im Außenkolben abgedichtet geführten relativ zum Außenkolben begrenzt verschiebbaren, durch das Betätigungsorgan direkt betätigbaren Innenkolben. Der Innenkolben ist dabei mit einem das Steuerventil betätigenden Ventilkolben einteilig ausgebildet, wobei die Betätigung der beiden Ventile gleichzeitig mit der Betätigung des Innenkolbens direkt mittels am Bedienungsorgan anliegender Betätigungsbolzen erfolgt.

Durch die erfinderischen Maßnahmen wird eine Senkung der Herstellungs- und Montagekosten bei gleichzeitiger Reduzierung des Gewichts der Betätigungseinheit erreicht. Ein weiterer Vorteil besteht in der Verkürzung von Ansprech- und Lösezeiten des Unterdruck-Bremskraftverstärkers.

Eine besonders kompakte Ausführung der erfindungsgemäßen Betätigungseinheit, bei der das Hauptzylindergehäuse ein Flanschteil aufweist, wird dadurch erzielt, daß das Flanschteil als Tragelement für das Verstärkergehäuse ausgebildet ist und zum Befestigen der Betätigungseinheit an der Spritzwand des Kraftfahrzeugs dient.

In weiterer Ausgestaltung der Erfindung wird vorgeschlagen, daß das Bedienungsorgan, vorzugsweise Bremspedal am Hauptzylindergehäuse drehbar gelagert und mittels eines Federelementes entgegen der Betätigungsdrehrichtung vorgespannt ist, wobei das Federelement durch eine Drehstaboder eine Schenkelfeder gebildet sein kann. Durch diese Maßnahme kann eine weitere Gewichtsreduzierung erreicht werden, da die auf auf die bewegliche Wand des Unterdruck-Bremskraftverstärkers einwirkende Rückstellfeder entfallen kann.

Eine wirksame Begrenzung des Weges des Primärkolbens bei dessen Rückstellbewegung wird bei einer vorteilhaften Weiterbildung des Erfindungsgegenstandes dadurch erreicht, daß das Bremspedal in Ruhestellung am Flanschteil abgestützt ist, wobei eine definierte von Verformungen des Verstärkergehäuses unabhängige Lage des Primärkolbens in Lösestellung dadurch erzielt wird, daß das Bremspedal an einem axial verstellbaren Anschlag anliegt.

Eine Übertragung der aus dem im Sekundärdruckraum herrschenden hydraulischen Druck resultierenden Reaktionskraft bei einem Ausfall des Primärdruckraumes wird nach einem weiteren vorteilhaften Erfindungsmerkmal dadurch ermöglicht, daß der den zweiten Druckraum begrenzende Kolben (Sekundärkolben) zweiteilig ausgebildet ist und durch einen mit einem gehäusefesten Anschlag zusammenwirkenden, durch eine erste Rückstellfeder vorgespannten Außenteil sowie einen im Außenteil abgedichtet geführten, sich am Außenteil unter der Wirkung einer zweiten Rückstellfeder abstützenden Innenteil gebildet ist.

Eine wesentliche Vereinfachung bzw. Erleichterung der Montage der erfindungsgemäßen Betätigungseinheit vom Motorraum des Kraftfahrzeuges aus kann dadurch erreicht werden, daß das Bremspedal zweiteilig ausgebildet ist und aus einem Bedienungsteil und einem Betätigungsteil besteht, wobei die Kraftübertragung zwischen dem Bedienungsteil und dem Betätigungsteil mittels einer Anlagefläche erfolgt, die entweder am Betätigungs- oder am Bedienungsteil angebracht ist.

Eine andere vorteilhafte Ausführungsvariante der Erfindung sieht vor, daß jedes der beiden Ventile durch einen Ventileinschraubsatz gebildet ist, in dem eine erste Ventilmanschette, eine zweite Ventilmanschette sowie ein zwischen den Ventilmanschetten liegendes Zwischenstück angeordnet sind, wobei der Ventilschließkörper durch ein halbkugelförmig ausgebildetes Ende eines im Ventileinschraubsatz bzw. im Zwischenstück geführten Betätigungsbolzens gebildet ist, das mit der ersten Ventilmanschette zusammenwirkt. Durch diese Maßnahme wird erreicht, daß die Ventile als vormontierte Baueinheiten geliefert und verbaut werden können.

Eine strömungsgünstige, geräuschmindernde Ausführung des das Steuerventil betätigenden Ventilkolbens sieht vor, daß der Ventilkolben in seinem der Lufteintrittsöffnung zugewandten Bereich kegelförmig ausgebildet ist.

Eine Übertragung der auf das Bremspedal einwirkenden Betätigungskraft auf den Außenkolben bei einem Ausfall der Verstärkungskraft wird bei einer anderen Ausgestaltung der Erfindung dadurch ermöglicht, daß im Außenkolben ein zu dessen Achse senkrecht stehender Stift vorgesehen ist, der bei Ausfall der Verstärkungskraft an der Wand eines im Innenkolben ausgebildeten Langlochs zur Anlage kommt, wobei Langloch und Stift eine Wegbegrenzung des Innenkolbens gegenüber dem Außenkolben beim Betätigen der Bremse bilden.

Ein sicheres Schließen bzw. Öffnen der Ventile wird schließlich bei einer bevorzugten Ausführungsform dadurch gewährleistet, daß die Betätigungsbolzen der Ventile mit dem Bedienungsorgan bzw. Bremspedal direkt gekoppelt sind.

Mit der vorliegenden Erfindung wird der Automobilindustrie eine kompkate, raumsparende Lösung zur Verfügung gestellt. Insbesondere die axiale Ausdehnung des Gesamtaggregats ist gegenüber Geräten des Standes der Technik erheblich reduziert. Es werden gute Voraussetzungen für eine automatische Montage der erfindungsgemäßen Betätigungseinheit geschaffen.

Weitere Einzelheiten der Erfindung sind der folgenden Beschreibung zweier Ausführungsbeispiele im Zusammenhang mit der beiliegenden Zeichnung zu entnehmen.

Es zeigt:
- Fig. 1: ein erstes Ausführungsbeispiel der Betätigungseinheit nach der Erfindung im Axialschnitt;
- Fig. 2: ein zweites Ausführungsbeispiel der Betätigungseinheit nach der Erfindung in einer der Fig. 1 entsprechenden Darstellung;
- Fig. 3: die Betätigungseinheit nach Fig. 1 in einer Schnittdarstellung entsprechend der Schnittlinie A-A der Fig. 1;
- Fig. 4: die Betätigungseinheit nach Fig. 1 in einer Schnittdarstellung entsprechend der Schnittlinie B-B der Fig. 1;
- Fig. 5: die Betätigungseinheit nach Fig. 1 in einer Schnittdarstellung entsprechend der Schnittlinie C-C der Fig. 1;
- Fig. 6: die Betätigungseinheit nach Fig. 1 in einer Schnittdarstellung entsprechend der Schnittlinie D-D der Fig. 1;
- Fig. 7: die Betätigungseinheit nach Fig. 1 in einer Schnittdarstellung entsprechend der Schnittlinie E-E der Fig. 1.

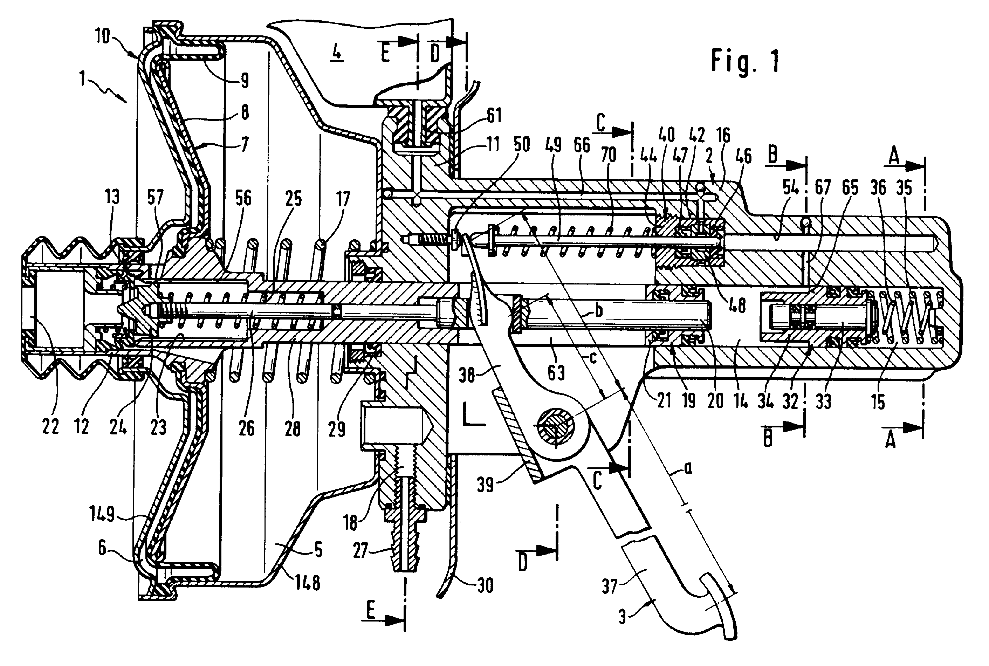

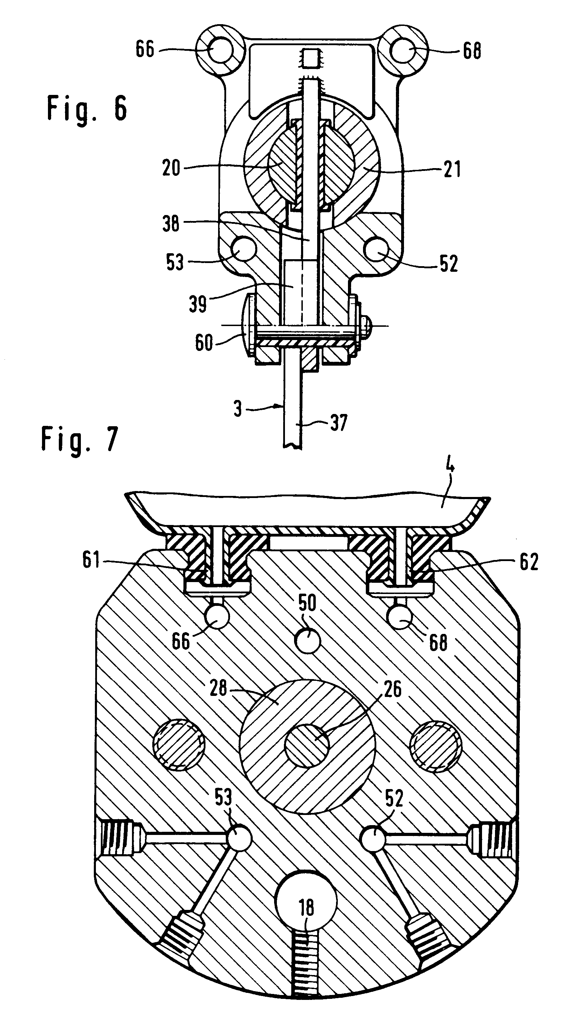

Die in Fig. 1 gezeigte Betätigungseinheit besteht im wesentlichen aus einem Unterdruck-Bremskraftverstärker 1, einem dem Unterdruck-Bremskraftverstärker nachgeschalteten, mit einem Flanschteil 11 versehenen Hauptbremszylinder, beispeilsweise einen Tandemhauptzylinder 2, sowie einem wirkungsmäßig zwischen dem Unterdruck-Bremskraftverstärker 1 und dem Tandemhauptzylinder 2 angeordneten Bedienungsorgan, vorzugsweise einem Bremspedal 3. Das als Trageelement für den Unterdruck-Bremskraftverstärker 1 sowie für einen mit Druckräumen 14,15 des Tandemshauptzylinders 2 in Verbindung stehenden Druckmittelvorratsbehälter 4 einteilig mit dem Hauptzylindergehäuse 16 ausgebildete Flanschteil 11 dient dabei der Befestigung der Betätigungseinheit an einer in der Zeichnung schematisch angedeuteten Spritzwand 30 eines Kraftfahrzeuges. Der Unterdruck-Bremskraftverstärker 1 weist dabei zwei schalenförmige, mit ihren offenen Seiten zusammengebaute Gehäuseteile 148,149 auf, die ein Verstärkergehäuse 10 bilden. Das in Fig. 1 rechts gezeigte Gehäuseteil 148 ist mittels Befestigungsbolzen (Fig. 7) mit dem Flanschteil 11 verbunden, während im linken Gehäuseteil 149 ein ein Steuerventil 13 aufnehmendes, eine Lufteintrittsöffnung 22 aufweisendes Steuerventilgehäuse 12 gleitend und abgedichtet geführt ist.

Der Innenraum des Verstärkergehäuses 10 wird durch eine darin angeordnete, aus einem am Steuerventilgehäuse 12 befestigten Membranteller 8 und einer daran anliegenden Rollmembran 9 bestehende bewegliche Wand 7 in eine über einen im Flanschteil 11 ausgebildeten Unterdruckkanal 18 bzw. einen daran angeschlossenen Unterdruckanschluß 27 evakuierbare Unterdruckkammer 5 sowie eine Arbeitskammer 6 unterteilt, die bei Betätigung des Bedienungsorgans 3 mittels des Steuerventils 13 belüftet wird. Das an sich bekannte Steuerventil 13 wird von einem mit dem Bedienungsorgan 3 in kraftübertragender Verbindung stehenden Ventilkolben 24 betätigt, dessen der Lufteintrittsöffnung 22 zugewandtes Ende konisch ausgebildet ist. Zum Zurückstellen der beweglichen Wand 7 ist eine Rückstellfeder 17 vorgesehen, die zwischen dem vorderen Gehäuseteil 148 und einer am Steuerventilgehäuse 12 ausgebildeten, näher nicht bezeichneten Ringfläche eingespannt ist.

Der in einer im Steuerventilgehäuse 12 vorgesehenen Bohrung 23 geführte, mittels einer Druckfeder 25 vorgespannte Ventilkolben 24 weist eine axiale Verlängerung 26 auf, die in einem axialen Fortsatz 28 des Steuerventilgehäuses 12 abgedichtet geführt ist. Der im Flanschteil 11 mittels einer Dichtmanschette 29 abgedichtete Fortsatz 28 erstreckt sich ins Innere des Hauptzylindergehäuses 16 und bildet mit seinem Ende einen Teil (Außenkolben) 21 eines den Primärdruckraum 14 begrenzenden Primärkolbens 19, dessen radial innenliegender Teil (Innenkolben) 20 durch das im Außenkolben 21 abgedichtet geführte Ende der Verlängerung 26 gebildet ist. Axial dem Primärkolben 19 gegenüber ist im Hauptzylindergehäuse 16 ein den Sekundärdruckraum 15 begrenzender Sekundärkolben 32 angeordnet, der ebenso wie der Primärkolben 19 zweiteilig ausgebildet ist und aus einem Außenteil 34 größeren Druchmessers sowie einen darin abgedichtet geführten Innenteil 33 besteht. Der Außenteil 34 liegt in Lösestellung an einem im Hauptzylindergehäuse 16 vorgesehen festen Anschlag 65 an, und zwar unter der Wirkung einer am Ende des Sekundärdruckraumes 15 sich abstützenden ersten Rückstellfeder 35, während der Innenteil 33 mittels einer koaxial zur ersten (35) angeordneten zweiten Rückstellfeder 36 vorgespannt ist und zur Anlage am Außenteil 34 kommt.

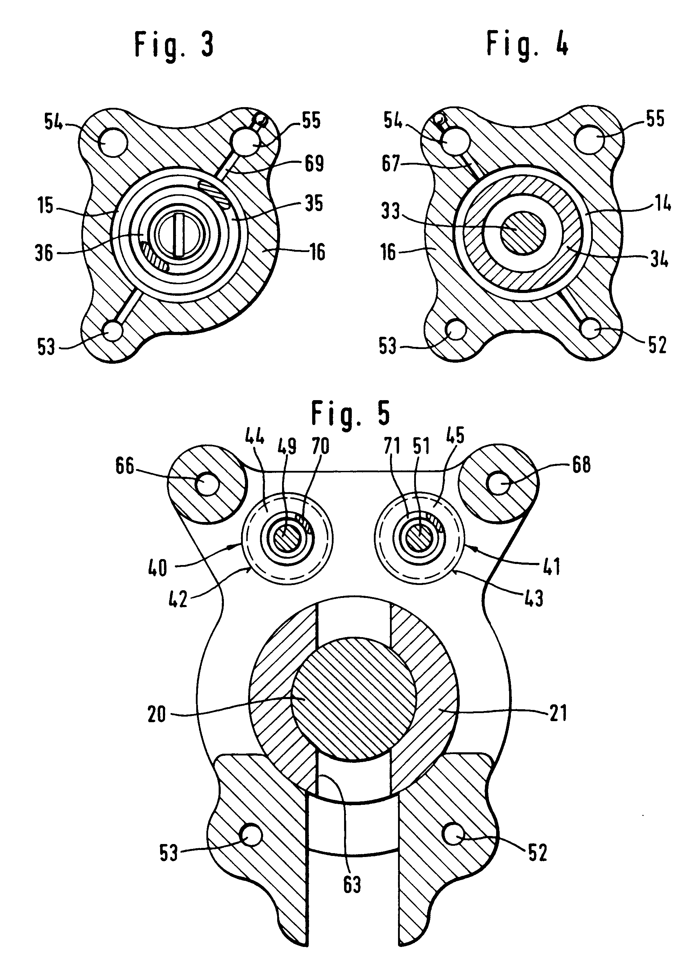

Um ein Nachfüllen der beiden Druckräume 14,15 mit hydraulischem Druckmittel zu ermöglichen ist der Druckmittelvorratsbehälter 4 an zwei am Flanschteil 11 ausgebildete Behälteranschlüsse 61,62 angeschlossen, die über Druckmittelkanäle 66,67,68,69 mit dem Primär- (14) und dem Sekundärdruckraum 15 ist Verbindung stehen. (Fig.3,4 und 7).

Außerdem führen die beschriebenen Verbindungen über zwei axiale Verlängerungen 54,55 von zwei im Hauptzylindergehäuse 16 parallel mit dessen Längsachse verlaufenden Bohrungen 42,43, die zwei durch das Bremspedal 3 direkt ansteuerbare Ventile 40,41 (Fig. 1 und 5) aufnehmen. Jedes der beiden Ventile 40,41 besteht aus einem in die Bohrung 42 bzw. 43 eindrehbaren Ventileinschraubsatz 44,45, der zwei Ventilmanschetten 46 und 47, ein die Ventilmanschetten trennendes Zwischenstück 48 sowie das Ende eines durch eine Druckfeder 70 bzw. 71 vorgespannten Betätigungsbolzen 49,51 als Ventilschließkörper aufnimmt. Die anderen Enden der Betätigungsbolzen 49,51 stützen sich unter der Wirkung der Druckfeder 70,71 direkt am Bremspedal 3 ab, das an einem im Flanschteil 11 vorgesehenen verstellbaren Anschlag 50 anliegt. Durch diese Maßnahme wird ein Einstellen des Bremspedales 3 ermöglicht.

Das in einem gehäusefesten Drehpunkt 60 am Hauptzylindergehäuse 16 gelagerte Bremspedal 3 ist bei der in Fig. 1 gezeigten Ausführungsvariante zweiteilig ausgebildet und besteht aus einem die Fußkraft des Fahrers aufnehmenden Bedienungsteil 37 sowie einem die zur Druckbegrenzung benötigte Kraft auf den Innen- (20) bzw. den Ventiilkolben 24 und die Betätigungsbolzen 49,51 übertragenden Betätigungsteil 38. Die Kraftübertragung vom Bedienungsteil 37 auf das Betätigungsteil 38 erfolgt vorzugsweise über eine am Betätigungsteil 37 ausgebildete Anlagefläche 39, die jedoch auch am Betätigungsteil 38 angeordnet sein kann. Die Wahl der Längenmaße der beiden Teile 37 und 38 ist dabei vorzugsweise derart getroffen, daß der Abstand a zwischen dem Angriffspunkt der Betätigungskraft (Fußkraft) und dem Drehpunkt 60 wesentlich größer ist als der Abstand c zwischen dem Drehpunkt 60 und dem Berührungspunkt zwischen dem Betätigungsteil 38 und dem Innenkolben 20, der kleiner als der Abstand b zwischen dem Drehpunkt 60 und dem Berührungspunkt zwischen dem Betätigungsteil 38 und den Betätigungsbolzen 49,51 der beiden Ventile 40,41 ist. Die zweiteilige Ausführung des Bremspedals 3 bringt eine wesentliche Erleichterung der Montage der erfindungsgemäßen Betätigungseinheit. Die kraftübertragende Verbindung zwischen den beiden Teilen 37,38 kann durch geeignete Maßnahmen (z.B. Bolzen oder Überziehhülse) gesichert werden.

Die Funktionsweise der in der Fig. 1 dargestellten erfindungsgemäßen Betätigungseinheit wird nachfolgend beschrieben:

In der Ausgangsposition (bei stillstehendem Motor) können die beiden Arbeitskammern 5 und 6 unter Atmosphärendruck stehen, so daß die bewegliche Wand 7 druckausgeglichen ist und durch die Rückstellfeder 17 an einem nicht gezeigten Anschlag am hinteren Gehäuseteil 149 gehalten wird. Die Lage dieses Anschlags ist vorzugsweise so gewählt, daß ein vollständiger Abbau des im Primärdruckraum 14 herrschenden Druckes im Regelfall möglich ist. Da der Ventilkolben 24 durch den Anschlag 50 des Bremspedals 3 positioniert ist, befindet sich das Steuerventil 13 in einem Zustand, in dem der am Ventilkolben 24 ausgebildete Atmosphärendichtsitz offen und der Unterdrucksitz am Steuerventilgehäuse 12 geschlossen ist, so daß die beiden Arbeitskammern 5 und 6 voneinander getrennt sind. Wird nun die erste Arbeitskammer 5 evakuiert (beim Anlassen des Motors), so bewirkt die an die bewegliche Wand 7 einwirkende Druckdifferenz deren Bewegung in Richtung auf den Hauptbremszylinder 2 zu, so daß zunächst der Atmosphärendichtsitz geschlossen und unmittelbar danach der Unterdrucksitz geöffnet wird. Dadurch wird ein Evakuieren der inzwischen von der Atmosphäre getrennten zweiten Arbeitskammer 6 ermöglicht, so daß an der beweglichen Wand 7 erneut ein Gleichgewichtszustand auftritt, in dem beide Dichtsitze des Steuerventils 13 geschlossen sind und der Unterdruck-Bremskraftverstärker 1 sich in einer Bereitschaftsstellung befindet, die in der Fig. 1 dargestellt ist.

Wird nun beim Bremsen das Bremspedal 3 betätigt, so werden durch die Krafteinwirkung der Innenkolben 20 mit dem Ventilkolben 24 nach rechts verschoben, wodurch das Steuerventil 13 betätigt wird. Dadurch wird an der beweglichen Wand 7 eine fußkraftproportionale Druckdifferenz eingesteuert, die eine Verstärkungskraft erzeugt, die eine Bewegung des Außenkolbens 21 in Betätigungsrichtung zur Folge hat. Gleichzeitig werden auch die parallel nebeneinander angeordneten Betätigungsbolzen 49,51 der beiden Ventile 40,41 in Schließrichtung verschoben, so daß die Verbindung zwischen dem Primär(14) bzw. dem Sekundärdruckraum 15 und dem drucklosen Druckmittelvorratsbehälter 4 unterbrochen wird.

Durch die Vorschubbewegung des durch den Innen- (20) und den Außenkolben 21 gebildeten Primärkolbens 19 wird im Primärdruckraum 14 ein hydraulischer Druck aufgebaut, der einerseits einen Druckaufbau im Sekundärdruckraum 15 zur Folge hat und andererseits über nicht gezeigte, an hydraulische Abgänge 52,53 (Fig. 3,4), angeschlossene Bremsleitungen zu den einzelnen Radbremsen weitergeleitet werden kann.

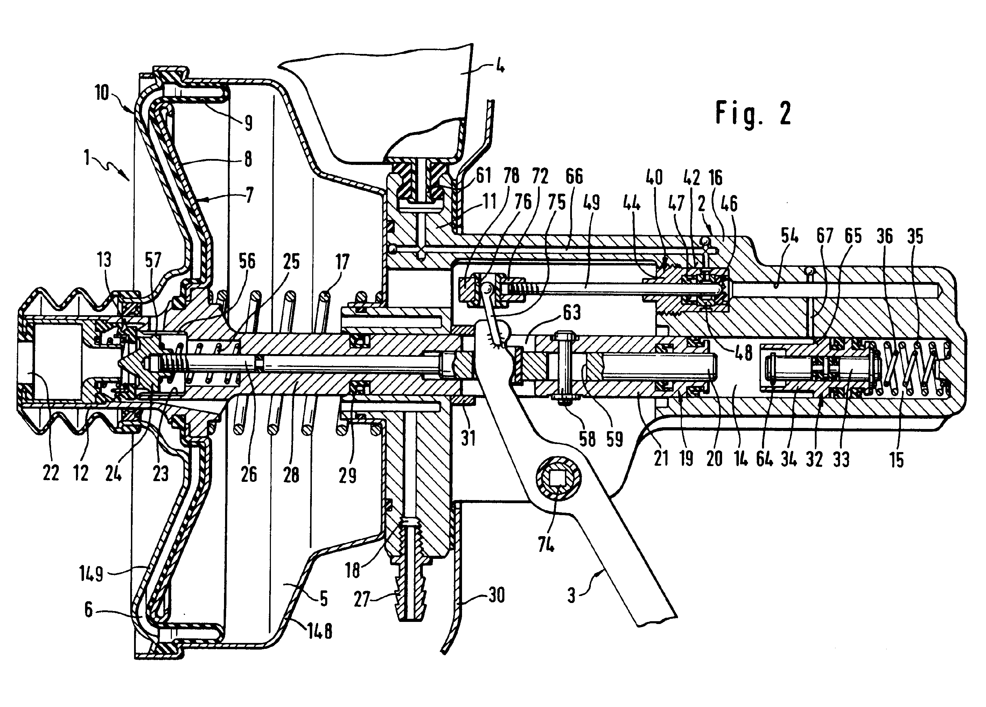

Bei einem Ausfall des zur Bildung der bei der Betätigung im Verstärkergehäuse 10 angesteuerten Druckdifferenz erforderlichen Unterdruckes (Ausfall der Unterdruckquelle), der einen Ausfall der Verstärkungskraft zur Folge hat, bleibt die bewegliche Wand 7 unter der Wirkung der Rückstellfeder 17 stehen, wobei eine im Außenkolben 21 vorgesehene Ausnehmung bzw. ein Schlitz 63 eine Verschiebung des Innenkolbens 20 in Betätigungsrichtung ermöglicht. Bei der in Fig. 2 gezeigten Ausführungsvariante stützt sich das einteilig ausgeführte Bedienungsorgan - Bremspedal - 3 am Flanschteil 11 mittels einer auf den Außenkolben 21 aufgeschobenen Hülse 31 ab und wird entgegen der Betätigungsrichtung durch ein den Drehpunkt 60 bildendes Federelement 74 vorgespannt, das beispielsweise als eine Drehstab- bzw. eine Schenkelfeder ausgebildet sein kann. Die Betätigungsbolzen 49,51 (nicht gezeigt) sind bei dieser Ausführung mit dem Bremspedal 3 gekoppelt, so daß sie nach einer Wegnahme der Betätigungskraft durch die Wirkung des Federelementes 74 in ihre Ausgangslage zurückgebracht werden. Die Koppelung erfolgt mittels eines am Ende des Bremspedals 3 angebrachten, beispielsweise mit dem Bremspedals 3 verschweißten Betätigungsarmes 75, dessen vorzugsweise kugelförmig ausgebildetes Ende in einer Führung 76 gleitend geführt ist. Die Führung 76 ist dabei in eine Betätigungsplatte 78 eingeknöpft, die mit zwei Gewindehülsen versehen ist, von denen eine in Fig. 2 dargestellt ist und das Bezugszeichen 72 trägt. In die Gewindehülsen sind die Enden der Betätigungsbolzen 49,51 eingeschraubt, so daß deren wirksame Länge und damit das Ventilspiel genau eingestellt werden kann.

Um bei einem Ausfall der Verstärkungskraft die auf das Bremspedal 3 einwirkende Betätigungskraft auch auf den Außenkolben 21 übertragen zu können ist der Außenkolben 21 mit einem senkrecht zur Achse stehenden Stift 58 versehen, der sich durch ein im Innenkolben 20 ausgebildetes Langloch 59 radial hindurcherstreckt. Bei der Betätigung ohne Verstärkungskraft kommt die Wand des Langlochs 59 zur Anlage am Stift 58, so daß der Außenkolben 21 vom Innenkolben 20 mitgenommen wird.

Bei einem Ausfall des Primärdruckraumes 14 erfolgt eine Übertragung der zur Erzeugung eines hydraulischen Druckes im Sekundärdruckraum 15 auf den Sekundärkolben 32 durch direkten mechanischen Kontakt zwischen ihm und dem Primärkolben 19. Sollte beim Ausfall des Primärdruckraumes 14 gleichzeitig auch die Verstärkungskraft ausfallen, so kann der Außenteil 34 mittels eines am Ende des Innenteiles 33 angeordneten Kraftübertragungselementes 64 mitgenommen werden.

### Bezugszeichenliste

- 1: Unterdruck-Bremskraftverstärker
- 2: Hauptbremszylinder
- 3: Bedienungsorgan, Bremspedal
- 4: Druckmittelvorratsbehälter
- 5: Unterdruckkammer
- 6: Arbeitskammer
- 7: bewegliche Wand
- 8: Membranteller
- 9: Rollmembran
- 10: Verstärkergehäuse
- 11: Flanschteil
- 12: Steuerventilgehäuse
- 13: Steuerventil
- 14: Primärdruckraum
- 15: Sekundärdruckraum
- 16: Hauptzylindergehäuse
- 17: Rückstellfeder
- 18: Unterdruckkanal
- 19: Primärkolben
- 20: Innenkolben
- 21: Außenkolben
- 22: Lufteintrittsöffnung
- 23: Bohrung
- 24: Ventilkolben
- 25: Druckfeder
- 26: Verlängerung
- 27: Unterdruckanschluß
- 28: Fortsatz
- 29: Dichtmanschette
- 30: Spritzwand
- 31: Hülse
- 32: Sekundärkolben
- 33: Innenteil
- 34: Außenteil
- 35: erste Rückstellfeder
- 36: zweite Rückstellfeder
- 37: Bedienungsteil
- 38: Betätigungsteil
- 39: Anlagefläche
- 40: Ventil
- 41: Ventil
- 42: Bohrung
- 43: Bohrung
- 44: Ventileinschraubsatz
- 45: Ventileinschraubsatz
- 46: Ventilmanschette
- 47: Ventilmanschette
- 48: Zwischenstück
- 49: Betätigungsbolzen
- 50: Anschlag
- 51: Betätigungsbolzen
- 52: hydraulischer Abgang
- 53: hydraulischer Abgang
- 54: Bohrungsabschnitt
- 55: Bohrungsabschnitt
- 56: Steg
- 57: Ringfläche
- 58: Stift
- 59: Langloch
- 60: Drehpunkt
- 61: Behälteranschuß
- 62: Behälteranschluß
- 63: Schlitz
- 64: Kraftübertragungselement
- 65: Anschlag
- 66: Druckmittelkanal
- 67: Druckmittelkanal
- 68: Druckmittelkanal
- 69: Druckmittelkanal
- 70: Druckfeder
- 71: Druckfeder
- 72: Gewindehülse
- 73: -
- 74: Federelement
- 75: Betätigungsarm
- 76: Führung
- 77: -
- 78: Betätigungsplatte
- 148: Gehäuseteil
- 149: Gehäuseteil

## Patentansprüche

1. Betätigungseinheit für eine hydraulische Kraftfahrzeugbremsanlage, bestehend aus:
a) einem Unterdruck-Bremskraftverstärker (1), dessen Verstärkergehäuse (10) durch eine bewegliche Wand (7) in eine Unterdruckkammer (5) und eine mittels eines in einem Steuerventilgehäuse (12) untergebrachten Steuerventils (13) belüftbare Arbeitskammer (6) unterteilt ist;
b) einem dem Unterdruck-Bremskraftverstärker (1) wirkungsmäßig nachgeschalteten Hauptbremszylinder (2) mit zwei in einem Gehäuse vorzugsweise hintereinander angeordneten, durch zwei Kolben (19,20) begrenzten Druckräumen (14,15), deren Verbindung mit einem drucklosen Druckmittelsvorratsbehälter (4) mittels zweier Ventile (40,41) absperrbar bzw. freigebbar ist,
c) sowie einem das Steuerventil (13) betätigenden Bedienungsorgan (3), das zwischen dem Unterdruck-Bremskraftverstärker (1) und dem Hauptbremszylinder (2) angeordnet ist, wobei
d) die zur Bildung einer auf die bewegliche Wand (7) einwirkenden Druckdifferenz benötigte Luft dem Steuerventil (13) aus dem Motorraum des Kraftfahrzeugs zugeführt wird, dadurch **gekennzeich****net**, daß der den ersten (Primär-) Druckraum (14) begrenzende Kolben (Primärkolben) (19) zweiteilig ausgebildet ist und aus einem mit der beweglichen Wand (7) in kraftübertragender Verbindung stehenden Außenkolben (21) und einem im Außenkolben abgedichtet geführten relativ zum Außenkolben begrenzt verschiebbaren, durch das Betätigungsorgan (3) direkt betätigbaren Innenkolben (20) besteht, der mit einem das Steuerventil (13) betätigenden Ventilkolben (24) einteilig ausgebildet ist, wobei die Betätigung der beiden Ventile (40,41) gleichzeitig mit der Betätigung des Innenkolbens (20) direkt mittels am Bedienungsorgan (3) anliegender Betätigungsbolzen (49,51) erfolgt.

2. Betätigungseinheit nach Anspruch 1, bei der das Gehäuse des Hauptbremszylinders mit einem Flanschteil versehen ist, dadurch **gekennzeichnet**, daß das Flanschteil (11) als Tragelement für das Verstärkergehäuse (10) ausgebildet ist und zum Befestigen der Betätigungseinheit an der Spritzwand (30) des Kraftfahrzeugs dient.

3. Betätigungseinheit nach Anspruch 2, dadurch **ge****kennzeichet**, daß sie vom Motorraum des Kraftfahrzeugs her an die Spritzwand (30) anbringbar und anschließend vom Innenraum (Fahrgastraum) aus verschraubbar, ausgestaltet ist.

4. Betätigungseinheit nach Anspruch 2, dadurch **gekennzeichnet**, daß das Bedienungsorgan, vorzugsweise Bremspedal (3) am Hauptzylindergehäuse (16) drehbar gelagert und mittels eines Federelementes (74) entgegen der Betätigungsdrehrichtung vorgespannt ist.

5. Betätigungseinheit nach Anspruch 4, dadurch **ge****kennzeichnet**, daß das Federelement durch eine Drehstabfeder gebildet ist.

6. Betätigungseinheit nach Anspruch 4, dadurch **ge****kennzeichnet**, daß das Federelement durch eine Schenkelfeder gebildet ist.

7. Betätigungseinheit nach Anspruch 4, 5 oder 6, dadurch **gekennzeichnet**, daß das Bremspedal (3) in Ruhestellung am Flanschteil (11) abgestützt ist.

8. Betätigungseinheit nach Anspruch 7, dadurch **gekennzeichnet**, daß das Bremspedal (3) an einem axial verstellbaren Anschlag (50) anliegt.

9. Betätigungseinheit nach Anspruch 7, dadurch **ge****kennzeichnet**, daß das Bremspedal (3) mittels einer auf den Außenkolben (21) aufgeschobenen Hülse (31) am Flanschteil (11) anliegt.

10. Betätigungseinheit nach einem der vorhergehenden Ansprüche, dadurch **gekennzeichnet**, daß die Unterdruckkammer (5) des Unterdruck-Bremskraftverstärkers (1) mittels eines im Flanschteil (11) vorgesehenen Unterdruckkanals (18) bzw. eines mit dem Unterdruckkanal (18) verbundenen Unterdruckanschlusses (27) evakuierbar ist.

11. Betätigungseinheit nach Anspruch 1, dadurch **ge****kennzeichnet**, daß der den zweiten Druckraum (15) begrenzende Kolben (Sekundärkolben) (32) zweiteilig ausgebildet ist und durch einen mit einem gehäusefesten Anschlag (65) zusammenwirkender, durch eine erste Rückstellfeder (35) vorgespannten Außenteil (34) sowie einem im Außenteil (34) abgedichtet geführten, sich am Außenteil (34) unter der Wirkung einer zweiten Rückstellfeder (36) abstützenden Innenteil (33) gebildet ist.

12. Betätigungseinheit nach Anspruch 1, dadurch **ge****kennzeichnet**, daß das Bremspedal (3) zweiteilig ausgebildet ist und aus einem Bedienungsteil (37) und einem Betätigungsteil (38) besteht.

13. Betätigungseinheit nach Anspruch 12, dadurch **ge****kennzeichnet**, daß die Kraftübertragung zwischen dem Bedienungsteil (37) und dem Betätigungsteil (38) mittels einer am Betätigungsteil (38) angebrachten Anlagefläche (39) erfolgt, an der der Bedienungsteil (37) zur Anlage kommt.

14. Betätigungseinheit nach Anspruch 12, dadurch **ge****kennzeichnet**, daß die Kraftübertragung zwischen dem Bedienungsteil (37) und dem Betätigungsteil (38) mittels einer am Bedienungsteil (37) angebrachten Anlagefläche (39) erfolgt, an der der Betätigungsteil (38) zur Anlage kommt.

15. Betätigungseinheit nach Anspruch 4 oder 12, dadurch **gekennzeichnet**, daß der Abstand (a) zwischen dem Angriffspunkt der Betätigungskraft und dem Drehpunkt (60) des Bedienungsorgans (Bremspedals) (3) wesentlich größer ist als der Abstand (c) zwischen dem Drehpunkt (60) und dem Punkt, in dem die Übertragung der zur Druckerzeugung benötigten Kraft auf den Innenkolben (20) stattfindet.

16. Betätigungseinheit nach Anspruch 1, dadurch **ge****kennzeichnet**, daß die Ventile (40,41) in zwei mit der Achse der Längsbohrung des Hauptzylindergehäuses (16) parallel verlaufenden Bohrungen (42,43) angeordnet sind.

17. Betätigungseinheit nach Anspruch 1, dadurch **ge****kennzeichnet**, daß jedes der beiden Ventile (40,41) durch einen Ventileinschraubsatz (44,45) gebildet ist, in dem eine erste Ventilmanschette (46), eine zweite Ventilmanschette (47) sowie ein zwischen den Ventilmanschetten (46,47) liegendes Zwischenstück (48) angeordnet sind, wobei der Ventilschließkörper durch ein halbkugelförmig ausgebildetes Ende eines im Ventileinschraubsatz (44 bzw. 45) bzw. im Zwischenstück (48) geführten Betätigungsbolzens (49,51) gebildet ist, das mit der ersten Ventilmanschette (46) zusammenwirkt.

18. Betätigungseinheit nach Anspruch 16, dadurch **ge****kennzeichnet**, daß die die Ventile (40,41) aufnehmenden Bohrungen (42,43) in axiale Bohrungsabschnitte (54,55) kleineren Durchmessers übergehen, die bei Ansteuern der Ventile (40,41) die Betätigungsbolzen (49,51) aufnehmen und in Verbindung mit dem Primär- (14) bzw. dem Sekundärdruckraum (15) stehen.

19. Betätigungseinheit nach Anspruch 4 oder 12 in Verbindung mit Anspruch 18, dadurch **gekennzeichnet**, daß der Abstand (b) zwischen dem Drehpunkt (60) und dem Angriffspunkt der zur Druckerzeugung benötigten Kraft an den Betätigungbolzen (49,51) größer ist als der Abstand (c) zwischen dem Drehpunkt (60) und dem Punkt, in dem die Übertragung der zur Druckerzeugung benötigten Kraft auf den Innenkolben (20) stattfindet.

20. Betätigungseinheit nach Anspruch 1, wobei das Steuerventil mittels eines mit dem Bedienungsorgan in kraftübertragender Verbindung stehenden Ventilkolben ansteuerbar ist, der im Steuerventilgehäuse bzw. in einer in der beweglichen Wand vorgesehenen Bohrung geführt ist, und wobei das Steuerventilgehäuse eine Lufteintrittsöffnung aufweist, dadurch **gekennzeichnet**, daß der Ventilkolben (24) in seinem der Lufteintrittsöffnung (22) zugewandten Bereich kegelförmig ausgebildet ist.

21. Betätigungseinheit nach Anspruch 20, dadurch **ge****kennzeichnet**, daß die Wandung der Bohrung (23) mit radialen, Luftführungskanäle begrenzenden Stegen (56) versehen ist, die mit einer am Ventilkolben (24) ausgebildeten Ringfläche (57) zusammenwirken.

22. Betätigungseinheit nach einem der vorhergehenden Ansprüche, bei der Kraftübertragungsmittel vorgesehen sind, die bei Ausfall der Verstärkungskraft ein Mitnehmen des Außenkolbens vom Innenkolben ermöglichen, dadurch **gekennzeichnet**, daß im Außenkolben (21) ein zu dessen Achse senkrecht stehender Stift (58) vorgesehen ist, der bei Ausfall der Verstärkungskraft an der Wand eines im Innenkolben (20) ausgebildeten Langlochs (59) zur Anlage kommt, wobei Langloch und Stift eine Wegbegrenzung des Innenkolbens (20) gegenüber dem Außenkolben (21) beim Betätigen der Bremse bilden.

23. Betätigungseinheit nach Anspruch 2, dadurch **ge****kennzeichnet**, daß das Flanschteil (11) als Tragelement für den drucklosen Druckmittelvorratsbehälter (4) ausgebildet und mit Behälter-Anschlüssen (61,62) versehen ist.

24. Betätigungseinheit nach einem der vorhergehenden Ansprüche, dadurch **gekennzeichnet**, daß der Außenkolben (21) eine Ausnehmung, insbesondere einen Schlitz (63) aufweist, um die Freigängigkeit des Bremspedals (3) bei Ausfall der Verstärkungskraft zu gewährleisten.

25. Betätigungseinheit nach einem Anspruch 11, dadurch **gekennzeichnet**, daß der Innenteil (33) an seinem dem Primärkolben (19) zugewandten Ende mit einem Kraftübertragungselement (64) versehen ist, das beim Ausfall des Primärdruckraumes (14) ein Mitnehmen des Außenteiles (34) ermöglicht.

26. Betätigungseinheit nach einem der Ansprüche 17 bis 19, dadurch **gekennzeichnet**, daß die Betätigungsbolzen (49,51) mit dem Bremspedal (3) direkt gekoppelt sind.

## Claims

1. An actuating unit for a hydraulic automotive vehicle brake system, being comprised of:
a) a vacuum brake power booster (1) whose booster housing (10) is divided by a movable wall (7) into a vacuum chamber (5) and a power chamber (6) which is ventable by means of a control valve (13) being accommodated in a control valve housing (12);
b) a master brake cylinder (2) succeeding the said vacuum brake power booster (1) as to its effect and comprising two pressure chambers (14, 15) being preferably arranged one behind the other within a housing, being defined by two pistons (19, 20), and whose connection to a pressureless hydraulic pressure agent reservoir (4) allows to be shut off or be released by means of two valves (40, 41);
c) and an operating element (3) which actuates the said control valve (13) and which is arranged between the said brake power booster (1) and the said master cylinder (2);
d) the air required for the generation of a pressure differential acting on the said movable wall (7) being supplied to the said control valve (13) from the engine compartment of the automotive vehicle,
**characterized** in that the said piston (primary piston) 19 defining the first (primary) said pressure chamber (14) is configurated two-part and is composed of an external piston (21) being in power-transmitting connection with the said movable wall (7) and of an internal piston (20) being sealedly guided within the said external piston, being slidable at a limited extent relative to the said external piston, and being directly actuatable by the said actuating element (3), which said internal piston is configurated rigid with a valve piston (24) actuating the said control valve (13), the actuation of both said valves (40, 41) taking place simultaneously with the actuation of the said internal piston (20) directly by means of actuating pins (49, 51) which are in abutment against the said operating element (3).

2. An actuating unit as claimed in claim 1, in which the housing of the master brake cylinder is furnished with a flange part, **charac****terized** in that the said flange part (11) is configurated as a supporting element for the said booster housing (10) and serves for fixing the actuating unit to the splash wall (30) of the automotive vehicle.

3. An actuating unit as claimed in claim 2, **characterized** in that it is configurated in such a manner as to be mountable to the splash wall (30) from the engine compartment of the automotive vehicle and as to be subsequently screwable or boltable from the interior (passenger compartment).

4. An actuating unit as claimed in claim 2, **characterized** in that the said operating element, preferably the brake pedal (3) is rotatably supported at the master cylinder housing (16) and is prestressed by means of a spring element (74) in the direction opposed to the sense of actuating rotation.

5. An actuating unit as claimed in claim 4, **characterized** in that the said spring element is formed by a torsion bar spring.

6. An actuating unit as claimed in claim 4, **characterized** in that the said spring element is formed by a leg-type spring.

7. An actuating unit as claimed in claim 4, 5 or 6, **characterized** in that in its position of rest the brake pedal (3) is supported at the said flange part (11).

8. An actuating unit as claimed in claim 7, **characterized** in that the brake pedal (3) is in abutment against an axially adjustable stop (50).

9. An actuating unit as claimed in claim 7, **characterized** in that the brake pedal (3) is in abutment against the said flange part (11) by means of a bushing (31) which is pushed onto the said external piston (21).

10. An actuating unit as claimed in anyone of the preceding claims, **characterized** in that the said vacuum chamber (5) of the said vacuum brake power booster (1) is evacuatable by means of a vacuum duct (18) which is provided in the said flange part (11), respectively by means of a vacuum connection (27) which is linked to the said vacuum duct (18).

11. An actuating unit as claimed in claim 1, **characterized** in that the piston (secondary piston) (32) defining the said second pressure chamber (15) is configurated two-part and is constituted by an external part (34) which interacts with a stop (65) being rigid with the housing and which is prestressed by a first return spring (35), and constituted by an internal part (33) which is sealedly guided within the said external part (34) and which takes support within the said external part (34) under the action of a second return spring (36).

12. An actuating unit as claimed in claim 1, **characterized** in that the brake pedal (3) is configurated two-part and is composed of an operating part (37) and of an actuating part (38).

13. An actuating unit as claimed in claim 12, **characterized** in that the power transmission between the said operating part (37) and the said actuating part (38) takes place by means of an abutment surface (39) which is positioned at the said actuating part (38) and against which the said operating part (37) comes in abutment.

14. An actuating unit as claimed in claim 12, **characterized** in that the power transmission between the said operating part (37) and the said actuating part (38) takes place by means of an abutment surface (39) which is positioned at the said actuating part (37) and against which the said operating part (38) comes in abutment.

15. An actuating unit as claimed in claim 4 or in claim 12, **characterized** in that the distance (a) between the point of attack of the actuating force and the pivotal point (60) of the said operating element (brake pedal) (3) is considerably larger than the distance (c) between the said pivotal point (60) and the point in which the transmission of the force required for the generation of pressure to the said internal piston (20) takes place.

16. An actuating unit as claimed in claim 1, **characterized** in that the said sleeves (40, 41) are positioned within two bores (42, 43) extending parallel to the longitudinal bore of the said master cylinder housing (16).

17. An actuating unit as claimed in claim 1, **characterized** in that each one of the said two valves (40, 41) is constituted by a screw-in valve assembly (44, 45) within which a first valve sleeve (46), a second valve sleeve (47), and an intermediate element (48) disposed between the said valve sleeves (46, 47) are positioned, the valve closing member being formed by a hemispherical end of an actuating pin (49, 51) being guided within the said screw-in valve assembly (44, respectively 45), respectively within the said intermediate element (48), which said end interacts with the said first valve sleeve (46).

18. An actuating unit as claimed in claim 16, **characterized** in that the said bores (42, 43) accommodating the said valves (40, 41) pass over into axial bore sections (54, 55) having a smaller diameter which accommodate the said actuating pins (49, 51) when the said valves (40, 41) are being actuated and which are in connection with the said primary pressure chamber (14), respectively with the said secondary pressure chamber (15).

19. An actuating unit as claimed in claim 4 or in claim 12 in conjunction with claim 18, **cha****racterized** in that the distance (b) between the said pivotal point (60) and the point of attack of the force required for the pressure generation at the said actuating pins (49, 51) is larger than the distance (c) between the said pivotal point (60) and the point in which the transmission of the force required for the pressure generation to the said internal piston (20) takes place.

20. An actuating unit as claimed in claim 1, in which the said control valve is actuatable by means of a valve piston which is in power-transmitting connection with the operating element and which is guided within the control valve housing, respectively within a bore being provided in the movable wall, and in which the control valve housing is furnished with an air inlet opening, **characterized** in that the said valve piston (24) has a conical configuration in its range facing the said air inlet opening (22).

21. An actuating unit as claimed in claim 20, **characterized** in that the wall of the said bore (23) is furnished with radial webs (56) which define air guide ducts and which interact with an annular surface (57) which is configurated at the said valve piston (24).

22. An actuating unit as claimed in anyone of the preceding claims, in which force-transmitting means are provided which render possible an entrainment of the external piston by the internal piston in the event of a failure of the boosting power, **characterized** in that a stud (58) is provided in the said external piston (21) which is positioned vertically in respect of the latter's axis and which in the event of a failure of the boosting power comes to be abutted against the wall of an oblong hole (59) being configurated in the said internal piston (20), the said oblong hole and the said stud constituting a limitation of the travel of the said internal piston (20) in respect of the said external piston (21) when the brake is being operated.

23. An actuating unit as claimed in claim 2, **characterized** in that the said flange part (11) is configurated as a supporting element for the said pressureless hydraulic pressure agent reservoir (4) and is furnished with reservoir connections (61, 62).

24. An actuating unit as claimed in anyone of the preceding claims, **characterized** in that the said external piston (21) is furnished with a recess, in particular with a slot (63), in order to safeguard that the brake pedal (3) is freely movable in the event of a failure of the boosting power.

25. An actuating unit as claimed in claim 11, **characterized** in that at its end facing the said primary piston (19) the said internal part (33) is furnished with a force-transmitting element (64) which allows the said external part (34) to be entrained in the event of a failure of the said primary pressure chamber (14).

26. An actuating unit as claimed in anyone of the preceding claims 17 to 19, **character****ized** in that the said actuating pins (49, 51) are directly coupled to the brake pedal (3).

## Revendications

1. Unité d'actionnement pour système hydraulique de freinage pour véhicule automobile, constituée :
a) d'un amplificateur d'effort de freinage à dépression (1), dont le boîtier d'amplificateur (10) est divisé par une paroi mobile (7) en une chambre à dépression (5) et une chambre de travail (6) pouvant être mise à l'atmosphère au moyen d'une valve de commande (13) montée dans un boîtier de valve de commande (12),
b) d'un maître-cylindre de frein (2), monté en aval de l'amplificateur d'effort de freinage à dépression (1),en ce qui concerne l'action de freinage,et comportant deux chambres de pression (14, 15) qui sont disposées dans un boîtier, de préférence l'une derrière l'autre, qui sont délimitées par deux pistons (19, 20) et dont la communication avec un réservoir de stockage d'agent de pression (4) sans pression peut être interrompue ou libérée au moyen de deux valves (40, 41), et
c) d'un organe de manoeuvre (3) actionnant la valve de commande (13) et disposé entre l'amplificateur d'effort de freinage à dépression (1) et le maître-cylindre de frein (2),
d) l'air nécessaire à la formation d'une différence de pression agissant sur la paroi mobile (7) étant envoyé à la valve de commande (13) à partir du compartiment moteur du véhicule automobile,
caractérisée en ce que le premier piston (piston primaire) (19) délimitant la première chambre de pression (chambre primaire) (14) est réalisé en deux parties et est constitué d'un piston extérieur (21), présentant une liaison de transmission de force avec la paroi mobile (7), et d'un piston intérieur (20) qui est agencé de façon à pouvoir être déplacé d'une manière limitée par rapport au piston extérieur en étant guidé d'une manière étanche dans ce dernier et de façon à pouvoir être actionné directement par l'organe d'actionnement (3) et qui est réalisé d'une pièce avec un piston de valve (24) actionnant la valve de commande (13), l'actionnement des deux valves (40, 41) ayant lieu en même temps que l'actionnement du piston intérieur (20) directement au moyen de tiges d'actionnement (49, 51) prenant appui sur l'organe de manoeuvre (3).

2. Unité d'actionnement suivant la revendication 1, dans laquelle le boîtier du maître-cylindre de frein est pourvu d'une partie formant bride, caractérisée en ce que la partie formant bride (11) est réalisée sous la forme d'un élément destiné à porter le boîtier d'amplificateur (10) et sert à la fixation de l'unité d'actionnement sur le tablier (30) du véhicule automobile.

3. Unité d'actionnement suivant la revendication 2, caractérisée en ce qu'elle est agencée de façon à pouvoir être posée sur le tablier (30) du côté du compartiment moteur du véhicule automobile, puis être fixée par vissage du côté du compartiment intérieur (compartiment du conducteur).

4. Unité d'actionnement suivant la revendication 2, caractérisée en ce que l'organe de manoeuvre, de préférence une pédale de frein (3), est monté de façon à pouvoir se déplacer en rotation sur le boîtier (16) du maître-cylindre et est soumis au moyen d'un élément à action élastique (74) à une précontrainte s'exerçant dans le sens opposé au sens de rotation d'actionnement.

5. Unité d'actionnement suivant la revendication 4, caractérisée en ce que l'élément à action élastique est formé d'une barre de torsion.

6. Unité d'actionnement suivant la revendication 4, caractérisée en ce que l'élément à action élastique est formé d'un ressort à branches.

7. Unité d'actionnement suivant la revendication 4, 5 ou 6, caractérisée en ce qu'en position de repos, la pédale de frein (3) prend appui sur la partie formant bride (11).

8. Unité d'actionnement suivant la revendication 7, caractérisée en ce que la pédale de frein (3) prend appui sur une butée (50) à position axiale réglable.

9. Unité d'actionnement suivant la revendication 7, caractérisée en ce que la pédale de frein (3) prend appui sur la partie formant bride (11) au moyen d'une douille (31) enfilée sur le piston extérieur (21).

10. Unité d'actionnement suivant l'une des revendications précédentes, caractérisée en ce que la chambre à dépression (5) de l'amplificateur d'effort de freinage à dépression (1) est agencée de façon que le vide puisse y être fait au moyen d'un conduit de dépression (18), ménagé dans la partie formant bride (11), ou d'un raccord de dépression (27) relié au conduit de dépression (18).

11. Unité d'actionnement suivant la revendication 1, caractérisée en ce que le piston (piston secondaire) (32) délimitant la seconde chambre de pression (15) est réalisé en deux parties et est constitué d'une partie extérieure (34), qui coopère avec une butée (65) fixe sur le boîtier et est soumise à une précontrainte par un premier ressort de rappel (35), et d'une partie intérieure (33) guidée de manière étanche dans la partie extérieure (34) et prenant appui sur oette partie extérieure (34) sous l'action d'un second ressort de rappel (36).

12. Unité d'actionnement suivant la revendication 1, caractérisée en ce que la pédale de frein (3) est réalisée en deux parties et est constituée d'une partie de manoeuvre (37) et d'une partie d'actionnement (38).

13. Unité d'actionnement suivant la revendication 12, caractérisée en ce que la transmission de force entre la partie de manoeuvre (37) et la partie d'actionnement (38) s'effectue au moyen d'une surface d'appui (39) qui est réalisée sur la partie d'actionnement (38) et sur laquelle la partie de manoeuvre (37) vient en appui.

14. Unité d'actionnement suivant la revendication 12, caractérisée en ce que la transmission de force entre la partie de manoeuvre (37) et la partie d'actionnement (38) s'effectue au moyen d'une surface d'appui (39) qui est réalisée sur la partie de manoeuvre (37) et sur laquelle la partie d'actionnement (38) vient en appui.

15. Unité d'actionnement suivant la revendication 4 ou 12, caractérisée en ce que la distance (a) entre le point d'attaque de la force d'actionnement et le point de rotation (60) de l'organe de manoeuvre (pédale de frein) (3) est notablement supérieure à la distance (c) entre le point de rotation (60) et le point où a lieu la transmission, sur le piston intérieur (20), de la force nécessaire à la production de cette pression.

16. Unité d'actionnement suivant la revendication 1, caractérisée en ce que les valves (40, 41) sont disposées dans deux alésages (42, 43) parallèles à l'axe de l'alésage longitudinal du boîtier (16) du maître-cylindre.

17. Unité d'actionnement suivant la revendication 1, caractérisée en ce que chacune des deux valves (40, 41) est constituée d'une pièce filetée rapportée de valve (44, 45) dans laquelle sont disposées une première coupelle d'étanchéité de valve (46), une seconde coupelle d'étanchéité de valve (47) et une pièce intermédiaire (48) disposée entre les coupelles d'étanchéité de valve (46, 47), le corps obturateur de valve étant constitué par une extrémité hémisphérique d'une tige d'actionnement (49, 51) qui est guidée dans la pièce filetée rapportée de valve (44 ou 45) ou dans la pièce intermédiaire (48) et qui coopère avec la première coupelle d'étanchéité de valve (46).

18. Unité d'actionnement suivant la revendication 16, caractérisée en ce que les alésages (42, 43) servant à loger les valves (40, 41) se prolongent par des sections axiales d'alésage (54, 55) de plus petit diamètre qui reçoivent les tiges d'actionnement (49, 51) lorsque les valves (40, 41) sont commandées et qui communiquent avec respectivement la chambre de pression primaire (14) et la chambre de pression secondaire (15).

19. Unité d'actionnement suivant la revendication 4 ou 12 en combinaison avec la revendication 18, caractérisée en ce que la distance (b) entre le point de rotation (60) et le point d'attaque, sur la tige d'actionnement (49, 51), de la force nécessaire à la production d'une pression est supérieure à la distance (c) entre le point de rotation (60) et le point où a lieu la transmission, sur le piston intérieur (20), de la force nécessaire à la production de cette pression.

20. Unité d'actionnement suivant la revendication 1, dans laquelle la valve de commande est agencée de façon à pouvoir être commandée au moyen d'un piston de valve qui présente une liaison de transmission de force avec l'organe de manoeuvre et qui est guidé dans le boîtier de la valve de commande ou dans un alésage ménagé dans la paroi mobile, tandis que le boîtier de la valve de commande comporte un orifice d'entrée d'air, caractérisée en ce que le piston de valve (24) a une forme conique dans sa partie faisant face à l'orifice d'entrée d'air (22).

21. Unité d'actionnement suivant la revendication 20, caractérisée en ce que la paroi de l'alésage (23) est pourvue de nervures (56) qui délimitent des conduits radiaux de guidage d'air et qui coopèrent avec une surface annulaire (57) formée sur le piston de valve (24).

22. Unité d'actionnement suivant l'une des revendications précédentes, dans laquelle il est prévu des moyens de transmission de force qui permettent un entraînement du piston extérieur par le piston intérieur en cas de défaillance de la force d'amplification, caractérisée en ce qu'il est prévu dans le piston extérieur (21) une tige (58) qui est perpendiculaire à l'axe de ce piston extérieur et qui vient en appui sur la paroi d'un trou allongé (59) ménagé dans le piston intérieur (20) en cas de défaillance de la force d'amplification, le trou allongé et la tige réalisant une limitation de course du piston intérieur (20) vis-à-vis du piston extérieur (21) lors d'un actionnement du frein.

23. Unité d'actionnement suivant la revendication 2, caractérisée en ce que la partie formant bride (11) est réalisée sous la forme d'un élément servant de support pour le réservoir de stockage d'agent de pression (4) sans pression et est pourvue de raccords de réservoir (61, 62).

24. Unité d'actionnement suivant l'une des revendications précédentes, caractérisée en ce que le piston extérieur (21) comporte un évidement, notamment une fente (63), afin d'assurer un déplacement libre de la pédale de frein (3) en cas de défaillance de la force d'amplification.

25. Unité d'actionnement suivant la revendication 11, caractérisée en ce qu'à son extrémité faisant face au piston primaire (19), la partie intérieure (33) est pourvue d'un élément de transmission de force (64) qui permet un entraînement de la partie extérieure (34) en cas de défaillance de la chambre de pression primaire (14).

26. Unité d'actionnement suivant l'une des revendications 17 à 19, caractérisée en ce que les tiges d'actionnement (49, 51) sont accouplées directement à la pédale de frein (3).
